# NEUE EUROPÄISCHE PATENTSCHRIFT

(11) **EP 0 271 691 B2**
(45) Veröffentlichungstag und Bekanntmachung des Hinweises auf die Entscheidung über den Einspruch: **11.11.1998**
(45) Hinweis auf die Patenterteilung: 23.10.1991
(21) Anmeldenummer: 87116245.9
(22) Anmeldetag: 04.11.1987
(51) Int. Cl.: G05B 19/418

(54) **Verfahren zum Steuern der dreidimensionalen Relativbewegung eines Roboters gegenüber einem an einem Werkstückträger befestigten Werkstück**
Method for controlling the three-dimensional relative movement between a robot and a work piece fastened to a work piece holder
Méthode pour commander le mouvement relatif en trois dimensions d'un robot par rapport à une pièce fixée sur un support de pièce

(30) Priorität: 17.11.1986 DE 3639235
(43) Veröffentlichungstag der Anmeldung: 22.06.1988
(73) Patentinhaber: SIEMENS AKTIENGESELLSCHAFT, 80333 München (DE)
(72) Erfinder: Höhn, Georg, Dipl.-Ing., D-8551 Pinzberg (DE); Hoos, Gerd, Dipl.-Ing., D-8520 Erlangen (DE); Meier, Christof, Dr., D-8551 Heroldsbach (DE)

(56) Entgegenhaltungen:
- EP-A- 0 158 447
- EP-A- 0 177 142
- K.H. Meisel:Dissertation"Integrierter Sensoreinsatz bei Industrieroboteranwendungen-Konzept und Realisierungsmethoden für die Robotersteuerung",1986, Saarbrücken, Seiten 1 bis 5 und 139 bis 153
- Fachberichte Messen-Steuern-Regeln/Wege zu sehr fortschrittlichen Handhabungssystemen, Nr. 4,1980, Springer-Verlag Berlin Heidelberg New York, K.H.Meisel: "Programmierung und Führung von Roboterbewegungen", Seiten 59 bis 76
- G.Duelen,J.Held,U.Kichhoff,H.Münch: "Concept and algotithm for the coordinated path control of two robots". In:Recent Trends in Robotics: Modelling, Control and Education,Hrsg.: M.Jamshidi, L.Y.S. Luh, M. Shahinpoor, Elsevier Science Publishing Co., 1986, Seiten 157 bis 162
- K.H. Meisel: Dissertation am IITB in Karlsruhe "Integrierter Sensoreinsatz bei Industrieroboteranwendungen-Konzept und Realisierungsmethoden für die Robotersteuerung", 1986, Kap. 3.2.7.

## Beschreibung

Bei einem bekannten Verfahren zum Steuern der Bewegung eines Roboters gegenüber einem Werkstück, daß auf einem beliebigen Werkstückträger befestigt sein kann, wird davon ausgegangen, daß sowohl das Werkstück. als auch der Roboter-Fußpunkt stationär sind, so daß die Relativbewegung zwischen dem Roboter und dem Werkstück einzig und allein durch eine dreidimensionale Bewegung des Roboters erfolgt. Diese Bewegung läßt sich dabei relativ einfach im Roboter-Koordinatensystem durch lineare bzw. kreisbogenförmige Bahnabschnitte beschreiben, die in relativ einfacher Weise äquidistant interpoliert werden können.

Aus der Europäischen Patentanmeldung 0158447 ist ein Robotersteuerungssystem bekannt, das in Verbindung mit einem Drehtisch arbeitet. Dabei muß der Roboter bei feststehendem Tisch geteached werden, wonach eine geänderte Winkelstellung des Drehtisches zur Modifikation der geteachten Bewegungsbahn des Roboters von dessen Steuerung übernommen werden kann. Auch die von diesem Robotersteuerungssystem generierte Bewegungsbahn läßt sich im Roboterkoordinatensystem durch lineare bzw. kreisbogenförmige Bahnabschnitte beschreiben, die durch die Winkelstellung des Drehtisches modifiziert werden. Das Robotersteuerungssystem ermöglicht jedoch lediglich eine Änderung der Werkstückposition in einer Ebene und erlaubt keine frei projektierbare Zustellbewegung zwischen dem Roboter und dem Werkstück.

Wenn jedoch zwischen dem Fußpunkt des Roboters und dem Werkstück bzw. dem Träger des Werkstücks eine frei projektierbare Zustellbewegung vorliegt, kann eine lineare bzw. kreisbogenförmige Bahn auf dem Werkstück nicht auf eine leicht zu interpolierende lineare oder kreisbogenförmige Bewegungsbahn des Roboters zurückgeführt werden. wodurch eine Programmierung der Bewegung des Roboters einen ausgesprochen hohen Aufwand erfordert.

Gerade im Bearbeiten von sich mit entsprechend anwenderbezogenen Randbedingungen bewegenden Werkstücken liegt jedoch ein neuer Anwendungsschwerpunkt der Robotertechnik. Die sich bewegenden Werkstücke können dabei beispielsweise auf beweglichen Tischen, z.B. Dreh- bzw. Dreh-Schwenk-Tischen, angeordnet sein oder aber der Roboter selbst ist verfahrbar angeordnet, sei es, daß er an einem Portal befestigt ist, sei es, daß er mit einem Fahrgestell ausgerüstet ist. Dabei kann das Werkstück sowohl stationär gehalten sein, als auch eine eigene Zustellbewegung ausführen.

Aufgabe der Erfindung ist es, ein Verfahren der eingangs genannten Art so auszubilden, daß auch dann. wenn zwischen dem Fußpunkt des Roboters und dem Werkstückträger eine freie projektierbare Bewegung vorliegt, in technisch einfacher Weise ein Steuern der Bewegungsbahn des Roboters zum Werkstück bzw. des diesen haltenden Werkstückträgers gewährleistet ist,

Gemäß der Erfindung wird diese Aufgabe durch ein Verfahren zum Steuern der dreidimensionalen Relativbewegung eines ortsveränderlichen Roboters nach den Merkmalen des Anspruchs 1 gelöst.

Eine erste vorteilhafte Ausbildung der Erfindung ist dadurch gekennzeichnet, daß die Transformationsbedingung durch iterative Berücksichtigung der Verbindungselemente und der Zusatzachsen vom Koordinatenursprung des Roboter-Koordinatensystems zum Koordinatenursprung des Zusatzachsen-Koordinatensystems erfolgt. Dabei ist eine besonders übersichtliche Verknüpfung der Koordinatensysteme zueinander gewährleistet.

In diesem Zusammenhang erweist es sich weiterhin als besonders vorteilhaft, daß die iterative Berücksichtigung durch eine Bedienerführung auslösbar ist, wodurch Fehlverknüpfungen zwischen den Koordinatensystemen mit großer Sicherheit ausgeschlossen werden können.

Ein Ausführungsbeispiel der Erfindung ist in der Zeichnung dargestellt und wird im folgenden näher erläutert.

Dabei zeigen:
- Fig. 1: ein übliches Verfahren zur Bewegungssteuerung eines Roboters,
- Fig. 2: einen Roboter im Zusammenwirken mit einem Dreh-Schwenk-Tisch,
- Fig. 3: Bewegungsbahnen beim erfindungsgemäßen Verfahren,
- Fig. 4: ein Blockschaltbild einer Einrichtung zur Durchführung des erfindunsgemäßen Verfahrens,
- Fig. 5: einen Drehtisch,
- Fig. 6: einen Roboter im Zusammenwirken mit einem Drehtisch und
- Fig. 7: ein Schaubild zur iterativen Verknüpfung der verwendeten Koordinatensysteme.

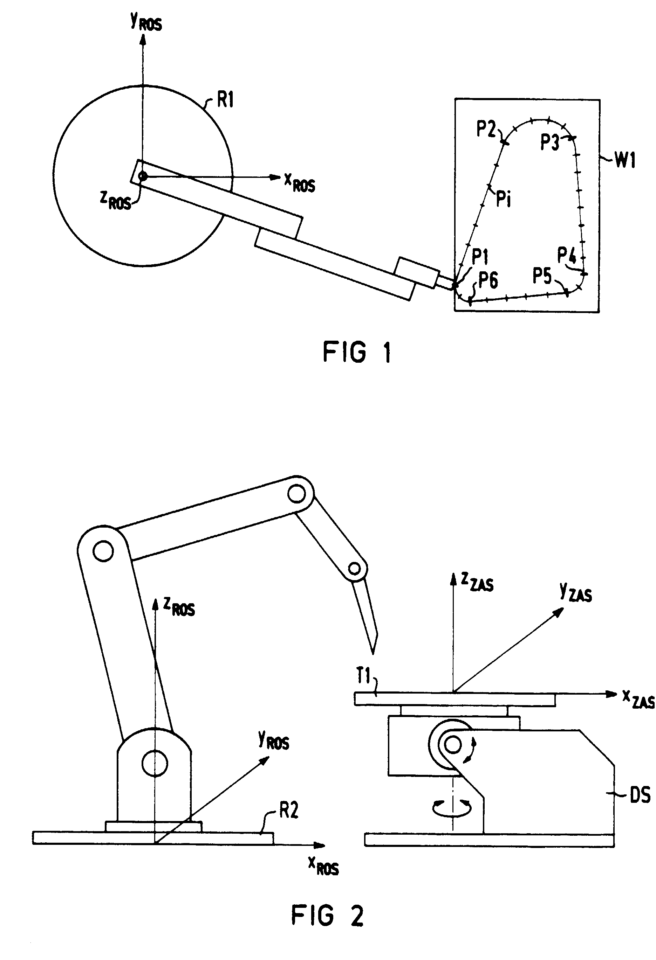

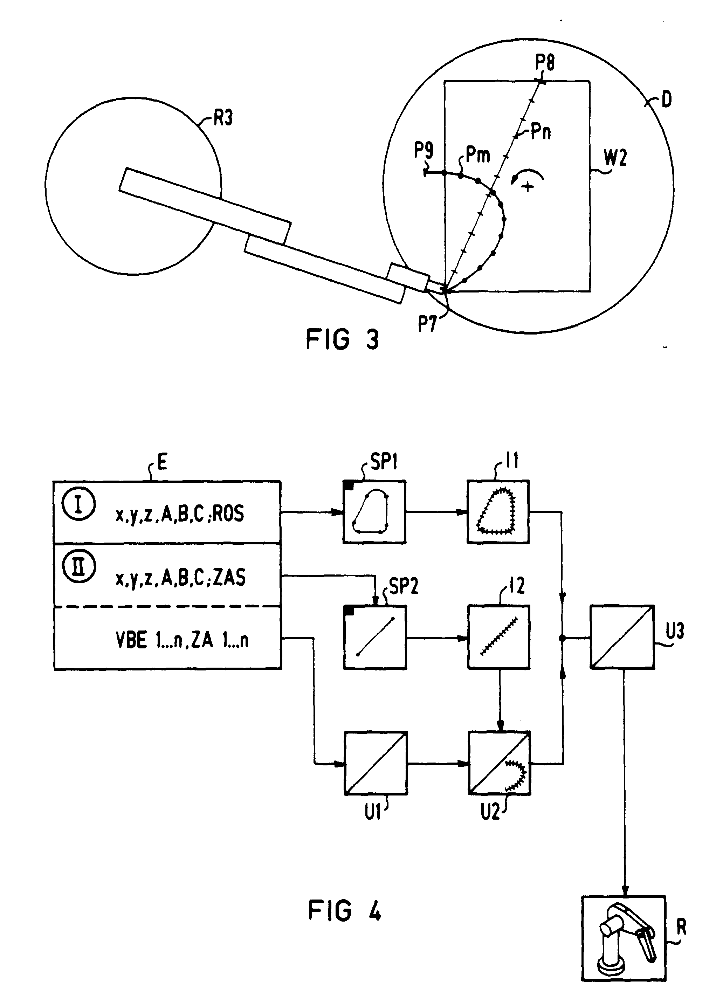

In der Darstellung gemäß Fig.1 ist ein Roboter R1 gezeigt, dessen Spitze eine Bewegung gegenüber einem Werkstück W1 ausführt, das durch der Übersichtlichkeit halber nicht dargestellte Befestigungsmittel stationär zum ebenfalls stationären Fußpunkt des Roboters R1 gehalten ist. Die Bahn der Bewegung ist durch signifikante Raumpunkte P1-P6 vorgegeben, die in ein Roboter-Koordinatensystem ROS eingebunden sind, dessen Koordinatenursprung für die drei raumbestimmenden Koordinaten x_{ROS}, y_{ROS} und z_{ROS} im Fußpunkt des Roboters R1 liegt. Dabei ist die Bewegungsbahn zwischen den signifikanten Raumpunkten P1 und P2 als eine Gerade ausgebildet, vom signifikanten Raumpunkt P2 zum signifikanten Raumpunkt P3 liegt eine kreisbogenförmige Bahn vor, an diese schließt sich bis zum signifikanten Raumpunkt P4 wiederum ein gerader Abschnitt an, der in eine kreisbogenförmige Bahn zum signifikanten Raumpunkt P5 hin übergeht, der durch eine lineare Bahn an den signifikanten Raumpunkt P6 führt, der wiederum durch eine kreisbogenförmige Bahn zum signifikanten Raumpunkt P1 gelangt. Die signifikanten Raumpunkte P1-P6 werden einer Steuerung für einen Roboter R vorgegeben, wie dies im Zusammenhang mit Fig.4 noch geschildert wird.

Die Bahnabschnitte zwischen den signifikanten Raumpunkten P1-P6 werden in der Steuerung äquidistant interpoliert, wodurch sich weitere Raumpunkte Pi ergeben. Sämtliche Raumpunkte P1 - P6 und Pi bestimmen die Referenzsignale zum Beeinflussen der Antriebselemente des Roboters R.

In der Darstellung gemäß Fig.2 ist ein Roboter R2 gezeigt, dessen Fußpunkt ebenfalls mit einem Roboter-Koordinatensystem ROS korreliert. Ferner ist jedoch ein Dreh-Schwenk-Tisch DS vorgesehen, der einen Träger T1 aufweist, auf dem Werkstücke, die der Übersichtlichkeit halber nicht dargestellt sind, befestigt werden können. Die solchermaßen befestigten Werkstücke können dann vom Roboter R2 bearbeitet werden. Dabei können die Werkstükke auf dem Dreh-Schwenk-Tisch DS sowohl um eine Horizontalachse geschwenkt werden (durch einen Doppelpfeil angedeutet), als auch um eine Vertikalachse (strichpunktiert angedeutet) gedreht werden (ebenfalls durch einen Doppelpfeil angedeutet). Dem Zentrum des Trägers T1 ist dabei ein mit der Bewegung des Dreh-Schwenk-Tisches DS mitlaufendes Zusatzachsen-Koordinatensystem ZAS zugeordnet, das in der Darstellung durch die drei Koordinaten x_{ZAS}, y_{ZAS} und z_{ZAS} angedeutet ist.

In der Darstellung gemäß Fig.3 ist ein Roboter R3 gezeigt, der mit seiner Spitze so gegenüber einem auf einem Drehtisch D angeordneten Werkstück W2 geführen werden soll, daß die resultierende Relativbewegung der Roboterspitze zum Werkstück W2 zu einer linearen Bahn zwischen signifikanten Raumpunkten P7 und und P8 führt, die äquidistant so interpoliert werden können, daß sich weitere Raumpunkte Pn ergeben.

Es sei angenommen, daß sich der Drehtisch D in der durch einen Pfeil angedeuteten Richtung gleichförmig so um seine durch ein Kreuz symbolisierte vertikale Achse dreht, daß sich am Ende der Drehung der mit dem Raumpunkt P8 zusammenfallende Bearbeitungsort am Werkstück W2 am Ort des Raumpunktes P9 befindet. Dies führt dazu, daß sich die Spitze des Roboters R3 längs einer Bahn bewegen muß, die zwischen signifikanten Raumpunkten P7 und P9 verläuft. Die Form der relativ einfachen linearen Bahn der resultierenden Relativbewegung kann nun jedoch nicht mehr durch eine einfache lineare oder radiale Bahn des Roboters R3 beschrieben werden, sondern die zur angestrebten Bearbeitung erforderliche Bahn des Roboters R3 vom signifikanten Raumpunkt P7 zum signifikanten Raumpunkt P9 müßte in naheliegender Weise durch eine Reihe von linearen und kreisbogenförmigen Bahnsegmenten näherungsweise beschrieben werden. Die signifikanten Raumpunkte zwischen diesen Bahnsegmenten, die durchaus eine weitere Interpolation erlauben würden, müßten dann einzeln in die Steuerung eingegeben werden.

Hier setzt die Erfindung ein, indem nicht solchermaßen ausgewählte signifikante Raumpunkte für die Bewegungsbahn des Roboters R3 im zugeordneten Roboter-Koordinatensystem (ROS, Fig.2) vorgegeben werden, die dann in üblicher Weise interpoliert werden, sondern indem im Zusatzachsen-Koordinatensystem (ZAS,gemäß Fig.2) die signifikanten Raumpunkte P7 und P8 vorgegeben werden. Daraufhin führt dann eine übliche äquidistante Interpolation der linearen Bahn zwischen den signifikanten Raumpunkten P7 und P8 zu weiteren Raumpunkten Pn. Der Interpolation folgt eine Transformation der Raumpunkte P7, P8 und Pn entsprechend einer Transformationsbedingung in das Roboter-Koordinatensystem ROS. Die Transformationsbedingung wird durch die Zustellbewegung, d.h. die Bewegung des Drehtisches D zum Fußpunkt des Roboters R3 bestimmt. Demzufolge ergeben sich transformierte Raumpunkte, nämlich der Raumpunkte P7 aus dem ursprünglichen signifikanten Raumpunkt P7, der Raumpunkt P9 aus dem ursprünglichen signifikanten Raumpunkt P8, sowie Raumpunkte Pm aus den ursprünglichen Raumpunkten Pn. Diese durch die Transformation sich ergebenden Raumpunkte P7, P9 und Pm können dann ohne eine weitere Interpolation in üblicher Weise über Umsetzer (U3, FIG 4) auf die Antriebselemente des Roboters R3 einwirken.

In der Darstellung gemäß Fig.4 ist ein Blockschaltbild einer Einrichtung zur Durchführung des erfindungsgemäßen Verfahrens gezeigt. Eine derartige Einrichtung ist sowohl zum Steuern der Bewegung eines Roboters R gegenüber einem nicht bewegten Werkstück als auch zum Steuern einer derartigen Bewegung gegenüber einem bewegten Werkstück geeignet. Im ersten Fall, der durch ein Symbol I angedeutet ist, werden einem Eingabegerät E im Roboter-Koordinatensystem (ROS,Fig.1) die Koordinaten x,y,z sowie zugehörige Orientierungswinkel A,B,C für signifikante Raumpunkte einer anzustrebenden Bewegungsbahn eingegeben. Die entsprechenden Werte werden einem Speicher SP1 zugeführt, wobei im Ausführungsbeispiel durch die verwendete Symbolik eine Bewegungsbahn entsprechend der Bahn des Roboters R1 zum Werkstück W1 (Fig.1) angedeutet ist. Die Koordinaten der signifikanten Raumpunkte gelangen dann an einen Interpolator I1, der durch Linear- bzw. Kreisbogeninterpolation die weiteren Raumpunkte ermittelt und demgemäß ein den Raumpunkten entsprechendes Ausgangssignal an einen Umsetzer U3 überträgt. der in üblicher Weise die Antriebselemente des Roboters R steuert.

Mit einem Symbol II im Feld für das Eingabegerät E ist angedeutet, daß für sich bewegende Werkstücke, z.B. das Werkstück W2 (Fig.3), die entsprechenden Koordinatenwert x, y, z sowie die entsprechenden Orientierungswinkel A, B, C im Zusatzachsen-Koordinatensystem ZAS eingegeben werden. Die signifikanten Raumpunkte im Zusatzachsen-Koordinatensystem ZAS gelangen an einen Speicher SP2, der in seiner Symbolik auf das Ausführungsbeispiel gemäß Fig.3 abgestellt ist. Die im Zusatzachsen-Koordinatensystem ZAS gegebene Bewegungsbahn wird in einem Interpolator 12 für Linear- und Kreisbogeninterpolation äquidistant interpoliert und das Ausgangssignal des Interpolators 12 gelangt an einen Umsetzer U2. Dieser Umsetzer U2 wird von einem Umsetzer U1 so angesteuert, daß er die Transformationsbedingung entsprechend der Zustellbewegung, d.h. der Bewegungsbeziehung zwischen dem Roboter-KoordinatensystemROS und Zusatzachsen-Koordinatensystem ZAS vornimmt. Demgemäß liefert der transfomierende Umsetzer U2 an seinem Ausgang die in das Roboter-Koordinatensystem ROS transformierten Raumpunkte, die über den Umsetzer U3 die Bewegung des Roboters R steuern.

Die Einstellung des Transformationsverhaltens des Umsetzers U2 erfolgt dadurch, daß iterativ die Zustellbewegung festlegende Verbindungselemente VBE1...n und Zusatzachsen ZA1...n über das Eingabegerät E der Steuerung mitgeteilt werden und daß dementsprechend von einem Umsetzer U1 ein Transformationssignal für den Umsetzer U2 ermittelt wird.

Auf die Bedeutung der Verbindungselemente VBE1...n sowie der Zusatzachsen ZA1...n wird im folgenden noch eingegangen.

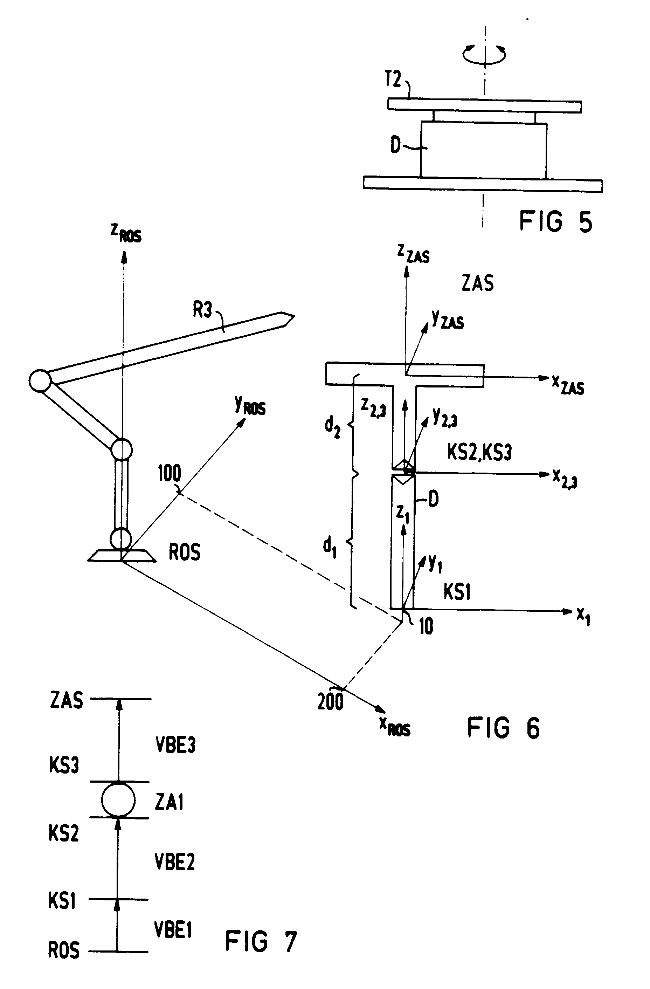

In der Darstellung gemäß Fig.5 ist ein Drehtisch D gezeigt, der um eine strichpunktiert angedeutete Achse drehbar ist (durch einen Doppelpfeil angedeutet) und der zur Halterung von beliebigen Werkstücken einen Träger T2 aufweist. Für diesen Drehtisch D und einen schematisch angedeuteten Roboter R3 ist in der Darstellung gemäß Fig. 6 ein Prinzipschaubild gezeigt, bei dem die schrittweise erfolgende Transformation vom Roboter-Koordinatensystem ROS zum Zusatzachsen-Koordinatensystem ZAS angedeutet ist.

In der Darstellung gemäß Fig.6 ist dem Roboter R3 in seinem Fußpunkt wie bereits im vorangegangenen geschildert, das Roboter-KoordinatensystemROS zugeordnet, das durch die Koordinaten x_{ROS}, y_{ROS} und z_{ROS} gekennzeichnet ist. Zu diesem Roboter R3 ist der Drehtisch D gemäß Fig.5 in der angegebenen Position angeordnet. Dem Fußpunkt des Drehtisches D wird nunmehr ein erstes Hilfskoordinatensystem KS1 zugeordnet, das Koordinaten x1, y1 und z1 aufweist. Der Fußpunkt dieses ersten Hilfskoordinatensystems KS1 zum Roboter-Koordinatensystem ROS ist durch Werte x_{ROS} = 200, y_{ROS} = 100, z_{ROS} = 10 bestimmt. Ferner betragen die Orientierungswinkel A = 45°, B = 0°, C = 0°. Diese sechs Werte repräsentieren das Verbindungselement VBE1. Dieses ist damit einzig und allein abhängig von der Aufstellung des Drehtisches D zum Roboter R3.

Durch die Geometrie des Drehtisches D ergibt sich ferner, daß das erste Hilfskoordinatensystem KS1 zu einem zweiten Hilfskoordinatensystem KS2 mit den Koordinaten x₂, y₂ und z₂ führt, indem dieses zweite Hilfskoordinatensystem KS2 durch Werte x = 0, y = 0 und z = d₁ (d₁ = Höhe des Drehgelenks über dem Fuß des Drehtisches D) sowie durch Orientierungswinkel A = 0°, B = 0°, C = 0° gegenüber dem ersten Hilfskoordinatensystem KS1 verschoben ist. Die Tatsache, daß im Koordinatenursprung des zweiten Hilfskoordinatensystem KS2 eine Drehung in Richtung der Koordinate z₂ erfolgt, findet seinen Niederschlag darin, daß eine Zusatzachse ZA1 eingefügt wird, was in der Zeichnung durch die zwei offenen Dreiecke, die das Gelenk symbolisieren, sowie durch ein drittes Hilfskoordinatensystem KS3 mit Koordinaten x₃, y₃ und z₃ angedeutet ist. Vom dritten Hilfskoordinatensystem KS3 geht ein Verbindungselement VBE3 aus, das durch den Abstand des Drehgelenkes des Drehtisches D zu seinem Träger T2, d.h. den Abstand d₂ gegeben ist. Um eben diesen Abstand d₂ entfernt vom dritten Hilfskoordinatensystem KS3 ist das Zusatzachsen-Koordinatensystem ZAS im Zentrum des Drehtisches D angedeutet. Dementsprechend liegt ein Verbindungselement VBE3 vor, das durch die Werte x = 0, y = 0, z = d₂ sowie durch die Orientierungswinkel A = 0°, B = 0°, C = 0° gegeben ist. Das Zusatzachsen-Koordinatensystem ZAS liegt im gewählten Ausführungsbeispiel in der Drehachse des Drehtisches D. Es ist jedoch auch möglich, daß dieses Zusatzachsen-Koordinatensystem ZAS am Rande des Trägers T2 angeordnet ist. Dementsprechend müßte dann ein weiteres Verbindungselement VBE4 vom Zentrum des Trägers T2 zu seinem Rande hin vorgesehen sein.

In der Darstellung gemäß Fig.7 ist noch einmal der prinzipielle Verkettungsweg vom Roboter-Koordinatensystem ROS zum Zusatzachsen-Koordinatensystem ZAS aufgezeigt. Die Transformationsschrittfolge ist dabei durch Pfeile angedeutet, die den Verbindungselementen VBE1, VBE2 und VBE3 zugeordnet sind. Das erste. zweite und dritte Hilfskoordinatensystem sind dabei durch KS1, KS2 und KS3 angedeutet. Das Gelenk des Drehtisches D findet dabei seinen Niederschlag in der Zusatzachse ZA1, die durch einen Kreis symbolisiert ist.

Es ist auch möglich, ausgehend von einem Roboter-Koordinatensystem auf mehrere Zusatzachsen-Koordinatensysteme überzugehen. Dies wäre beispielsweise bei einem Dreh-Schwenk-Tisch mit zwei unabhängig zueinander bewegbaren Trägern (Tischen) sinnvoll.

## Patentansprüche

1. Verfahren zum Steuern der dreidimensionalen Relativbewegung eines ortsveränderlichen Roboters (R), dem ein auf den Fußpunkt des Roboters (R) bezogenes Roboter-Koordinatensystem (X_{ROS}, Y_{ROS}, Z_{ROS}) zugeordnet ist, gegenüber einem in einer beliebigen festen räumlichen Zuordnung an einem ebenfalls ortsveränderlichen Werkstückträger (DS, D) befestigten Werkstück (W), wobei die Bahn der Relativbewegung durch signifikante Raumpunkte (P) bestimmbar ist, wobei weitere Raumpunkte (Pi) durch eine äquidistante Interpolation der Bahnabschnitte zwischen den signifikanten Raumpunkten (P) erzeugt werden und wobei durch den Raumpunkten (P) im Roboter-Koordinatensystem (X_{ROS}, Y_{ROS}, Z_{ROS}) entsprechende Referenzsignale die Antriebselemente des Roboters beeinflußt werden, mit folgenden weiteren Verfahrensschritten:
a) es ist ein auf einen beliebigen Punkt des Werkstückträgers (DS, D) bezogenes Zusatzachsen-Koordinatensystem (x_{ZAS}, y_{ZAS}, z_{ZAS}) vorgesehen,
b) die signifikanten Raumpunkte werden (P7, P8) in diesem Zusatzachsen-Koordinatensystem (x_{ZAS}, y_{ZAS}, z_{ZAS}) vorgegeben,
c) die Interpolation der Bahnabschnitte zur Erzeugung der weiteren Raumpunkte zwischen den signifikanten Raumpunkten (P7, P8) wird ebenfalls in diesem Zusatzachsen-Koordinatensystem (x_{ZAS}, y_{ZAS}, z_{ZAS}) vorgenommen,
d) alle in diesem Zusatzachsen-Koordinatensystem (x_{ZAS}, y_{ZAS}, z_{ZAS}) vorliegenden Raumpunkte (P7, P8, Pn) werden über eine Transformationsbedingung unmittelbar in das Roboter-Koordinatensystem (x_{ROS}, y_{ROS}, z_{ROS}) übertragen, wobei die Transformationsbedingung eine der Relativbewegung unterlagerte, frei projektierbare Zustellbewegung zwischen dem Werkstückträger (W) und dem Fußpunkt des Roboters (R) berücksichtigt,
e) die Transformationsbedingung erfolgt durch iterative Berücksichtigung der Verbindungselemente (VBE1,VBE2, VBE3) und der Zusatzachsen (ZA1) vom Koordinatenursprung des Roboter-Koordinatensystems (x_{ROS},y_{ROS},z_{ROS}) zum Koordinatenursprung des Zusatzachsen-Koordinatensystems (x_{ZAS},y_{ZAS},z_{ZAS}).

2. Verfahren nach Anspruch 1, **dadurch gekennzeichnet,** daß die iterative Berücksichtigung durch eine Bedienerführung auslösbar ist.

## Claims

1. Method for controlling the three-dimensional relative movement of a movable robot (R), with which there is associated a robot coordinate system (X_{ROS}, Y_{ROS}, Z_{ROS}) relative to the base of the robot (R), in relation to a work piece (W) which is secured in any fixed spatial associated arrangement to a likewise movable work piece carrier (DS, D), with it being possible to determine the path of the relative movement by significant points in space (P), further points in space (Pi) being generated by equidistant interpolation of the path sections between the significant points in space (P), and the driving elements of the robot being influenced by reference signals corresponding to the points in space (P) in the robot coordinate system (X_{ROS}, Y_{ROS}, Z_{ROS}), having the following further method steps:
a) a supplementary-axis coordinate system (x_{ZAS}, y_{ZAS}, z_{ZAS}) relative to any point of the work piece carrier (DS, D) is provided;
b) the significant points in space (P7, P8) are specified in this supplementary-axis coordinate system (x_{ZAS}, y_{ZAS}, z_{ZAS});
c) the interpolation of the path sections for the generation of the further points in space between the significant points in space (P7, P8) is also effected in this supplementary-axis coordinate system (x_{ZAS}, y_{ZAS}, z_{ZAS});
d) all the points in space (P7, P8, Pn) present in this supplementary-axis coordinate system (x_{ZAS}, y_{ZAS}, z_{ZAS}) are translated by way of a transformation condition directly into the robot coordinate system (x_{ROS}, y_{ROS}, z_{ROS}), with the transformation condition taking account of a feed motion, which is subordinate to the relative movement and can be freely projected, between the work piece carrier (W) and the base of the robot (R);
e) the transformation condition is effected by iteratively taking account of the connecting elements (VBE1, VBE2, VBE3) and the supplementary axes (ZA1) from the origin of coordinates of the robot coordinate system (x_{ROS}, y_{ROS}, z_{ROS}) to the origin of coordinates of the supplementary-axis coordinate system (x_{ZAS}, y_{ZAS}, z_{ZAS}).

2. Method according to claim 1, characterised in that the process of taking account iteratively can be initiated by operator control.

## Revendications

1. Procédé pour commander le déplacement tridimensionnel relatif d'un robot (R), dont la position est variable et auquel est associé un système de coordonnées (X_{ROS}, Y_{ROS}, Z_{ROS}) rapporté au pied du robot (R), par rapport à une pièce à usiner (w) fixée, selon une association spatiale quelconque fixe, à un support (DS,D) de la pièce à usiner, dont la position est également variable, et selon lequel la trajectoire du déplacement relatif peut être déterminée par des points importants (P) dans l'espace, et selon lequel d'autres points (Pi) dans l'espace sont obtenus au moyen d'une interpolation équidistante des sections de la trajectoire entre les points importants (P) dans l'espace, et selon lequel les éléments d'entraînement du robot sont influencés par des signaux de référence qui correspondent aux points (P) dans l'espace dans le système de coordonnées (X_{ROS}, Y_{ROS}, Z_{ROS}) du robot, et présentant les autres étapes opératoires suivantes:
a) il est prévu un système de coordonnées (x_{ZAS}, y_{ZAS}, z_{ZAS}) d'axes supplémentaires, rapporté à un point quelconque du support (DS,D) de la pièce à usiner,
b) les points importants dans l'espace (P7,P8) sont prédéterminés dans ce système de coordonnées (x_{ZAS}, y_{ZAS}, z_{ZAS}) d'axes supplémentaires,
c) l'interpolation des sections de la trajectoire pour l'obtention d'autres points de l'espace entre les points importants de l'espace (P7, P8) est également réalisée dans ce système de coordonnées (x_{ZAS}, y_{ZAS}, z_{ZAS}) d'axes supplémentaires,
d) tous les points de l'espace (P7,P8,Pn), qui sont situés dans ce système de coordonnées (x_{ZAS}, y_{ZAS}, z_{ZAS}) d'axes supplémentaires, sont transmis directement, par l'intermédiaire d'une condition de transformation, dans le système de coordonnées (x_{ROS}, y_{ROS}, z_{ROS}) du robot, la condition de transformation prenant en compte un déplacement d'avance, qui peut être projeté librement et est subordonné au déplacement relatif, entre le support (W) de la pièce à usiner et le pied du robot (R).
e) la condition de transformation est obtenue au moyen de la prise en compte itérative des éléments ce liaison (VBE1,VBE2,VBE3) et des axes supplémentaires (ZA1), partant de l'origine des coordonnées du système de coordonnées (x_{ROS}, y_{ROS}, z_{ROS}) du robot et aboutissant à l'origine des coordonnées du système de coordonnées (x_{ZAS}, y_{ZAS}, z_{ZAS}) d'axes supplémentaires.

2. Procédé selon la revendication 1, caractérisé par le fait que la prise en compte itérative peut être déclenchée par la commande de l'utilisateur.
